# EUROPEAN PATENT SPECIFICATION

(11) **EP 1 157 230 B1**
(45) Date of publication and mention of the grant of the patent: **10.05.2006**
(21) Application number: 00901362.4
(22) Date of filing: 10.01.2000
(51) Int. Cl.: F16K 31/68, G05D 23/02

(54) **THERMAL CONTROL VALVE**
THERMOSTATISCHES STEUERVENTIL
VANNE THERMOSTATIQUE

(30) Priority: 14.01.1999 SE 9900092
(43) Date of publication of application: 28.11.2001
(73) Proprietor: Tour & Andersson AB, 524 80 Ljung (SE)
(72) Inventor: KUMLIN, Krister, S-524 92 Herrljunga (SE)
(74) Representative: Pitkänen, Hannu Alpo Antero
(86) International application number: PCT/SE2000/000022
(87) International publication number: WO 2000/042341

(56) References cited:
- EP-A2- 0 767 332

## Description

The present invention relates to a thermal control valve of the type described in detail in the preamble of claim 1.

Such a valve is used in hot water loops in either a faucet water system or a central heating installation, also for floor heating.

The majority of multi-unit dwellings, offices and hotels today are provided with circuits for hot water circulation in faucet water systems in order to reduce the waiting times for hot water and an unnecessary water circulation and consumption respectively of water with low temperatures, until the hot water having the desired temperature reaches the faucets.

The majority of such circulation circuits are adjusted by means of a conventional regulating valve. A constant amount of hot water is circulated continuously. This reduces the waiting times for hot water at the most remote faucets.

Instead of allowing a certain amount of water to circulate all the time, it is possible to install a thermal control valve in each loop. An intermittent adjustment of the hot water is obtained in such an installation.

The principle is, that a desired temperature is adjusted on the thermal control valve. If the temperature of the inlet water to the valve is lower than the adjusted value, the valve will be open. However, if this temperature is higher, the valve will shut off. The water flow ceases, until the water in the loop has cooled to a level below the adjusted value. The valve then opens and hot water can circulate again.

Valves already known in this field and designed for this purpose are not designed to stand possible elevated temperatures without being damaged. The valve bodies can, due to this and/or for other reasons, become jammed and the thermostat bodies can cease to function. Also, tightness and then also leakage problems can occur during cooling, when the valve has been shut off in order to repair the system or the like, or, primarily due to such leakage problems, a general shut-off function is not integrated into the valve, so that it has been necessary to build an additional valve for such a shut-off into the system. Additional deficiencies and drawbacks may also occur with the valves already known in this field.

EP-A-0 767 332 A2 relates to a thermostat mixer, the main object of which is to solve the problems associated with lime deposits and which are solved by using a special cage between the house and the valve body of the mixer. This mixer has an outlet, which is open all the time the mixer is used and is in communication all the time with a hot water and/or cold water inlet, i.e. if one of the inlets is entirely open, then the other inlet is entirely closed, or alternatively the two inlets both are partially in communication with the common outlet, depending on the position of the thermostat body of the mixer. The mixer has, as a thermal protection, an auxiliary stroke spring, which is stronger than a prestressing spring, against the forces of which the thermostat body is designed to expand. Said auxiliary stroke spring is mounted in a hollow threaded bolt, the axial position of which can be adjusted via the manual handle of the mixer but which otherwise is stationarily mounted and consequently not is actuatable by operation conditions. Such a mixer does not have any shut off- but only a redistribution-function and its thermostat body, which is protected against too high temperatures through said auxiliary stroke spring, is only designed to carry out this function, but not to carry out any shut off-function and to secure this in a special operation position, e.g. during cooling.

The object of the present invention is to counteract and as far as possible remove the above-mentioned drawbacks and deficiencies and to further develop the state of the art in order to obtain a reliable multiple function-valve at relatively low costs. The life of the valve is to be large and it must be possible to install the valve in a simple and quick way and to, whenever required, use it manually. However, it is particularly important, that the automatic function of the valve is guaranteed to a high degree, also when extraordinary stresses and operation conditions exist.

These objects are attained according to the present invention by designing a valve of the type described above in the way set forth in the characterizing clause of claim 1.

Additional characterizing features and advantages of the invention are set forth in the following description, reference being made to the enclosed drawings, which show, in a partly simplified, schematical form, a preferred but not limiting embodiment. The drawings show in detail:
Fig. 1 a principal outline, which depicts the installation of valves according to the invention;
Fig. 2 a diametrical axial sectional view of a thermal control valve according to the invention in an open position, which also is the upper/outer end position of the valve handle;
Fig. 3 a corresponding view of the same valve in a normal operation position, closed by the thermostat body;
Fig. 4 a corresponding view of the same valve in a closed position, caused by a too high temperature;
Fig. 5 a corresponding view of the same valve in a manually closed position at a relatively high temperature;
Figs. 6 a view corresponding to Fig. 5, when the temperature has decreased to a relatively low level; and

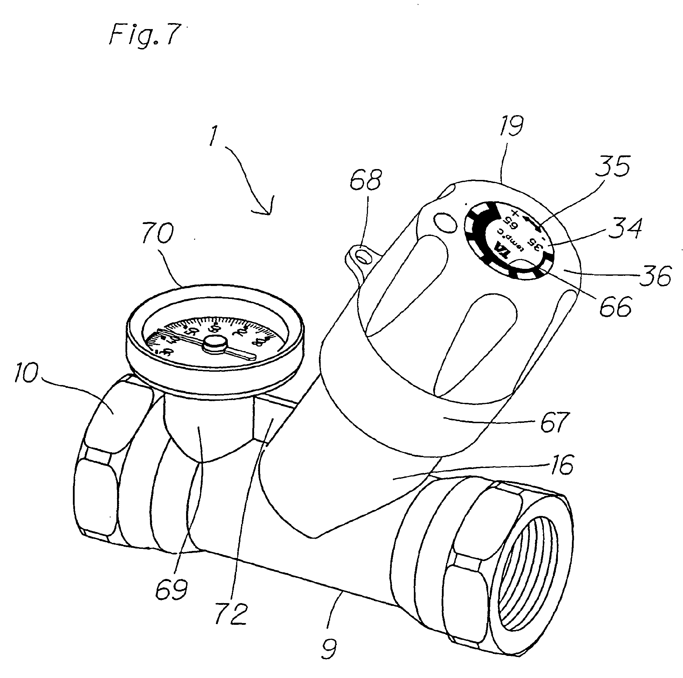

Fig. 7 a perspective view of a valve according to Figs. 2-6.

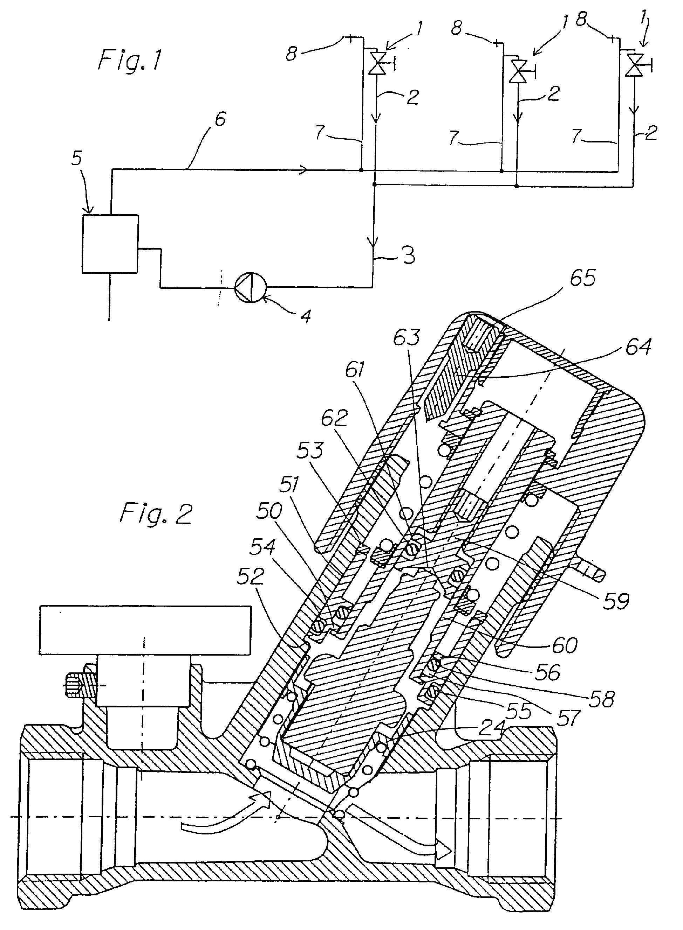

In Fig. 1 in the drawings a typical application embodiment of thermal control valves according to the present invention is shown. Such valves 1 are connected to return branches 2 to a return pipe 3, which via a hot water circulation pump 4 leads to a water heater 5, from which a feeding pipe 6 with branches 7 leads to tapping points 8, adjacent to which branches 7 change to said return branches 2, each one being provided with its valve 1.

The valves are closed and opened independently owing to the adjusted temperature. Thus, a hot water circulation through said branches solely occurs, provided the temperature falls below an adjusted value. In this way an unnecessary water circulation is avoided.

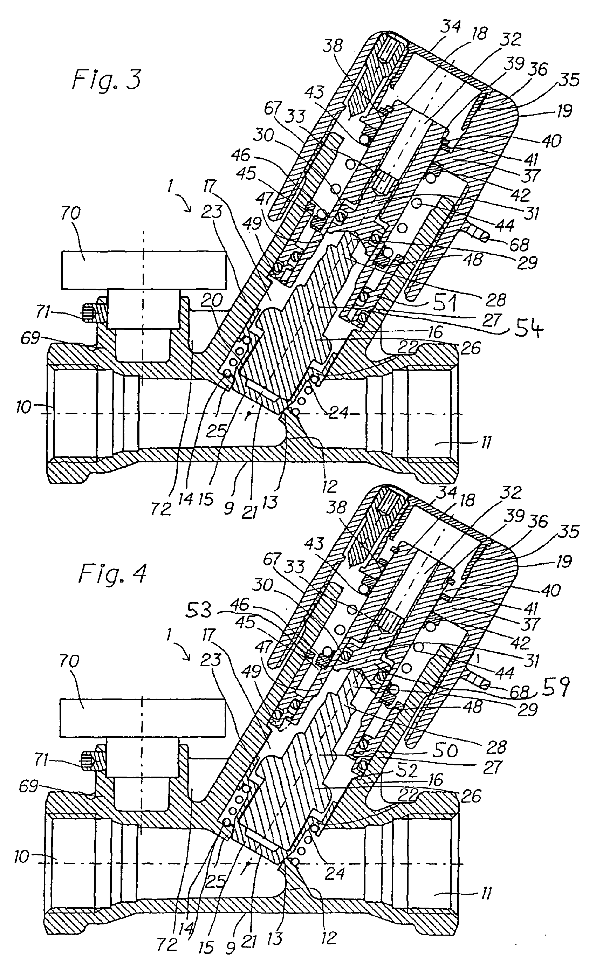

Valve 1, shown in Figs. 2-6, comprises a house 9 having an inlet 10 and an outlet 11, which are separated by a partition wall 12 with a seat 13, arranged in the wall and interacting with and counteracting the actions of a regulating spring 14 having a valve body 15, which is guided in a valve housing wall 16 and influenced by a thermostat body 17, which in its turn is influenced by a spindle 18, the axial position of which and consequently the position of the valve body and the contact pressure of the valve body against the seat respectively being adjustable by means of a valve handle 19. Since the static pressure in water heater installations having tapping points may fluctuate between 2 and 10 bars, the diameter of the spindle is minimized in order to stand high static pressures.

Valve body 15 is designed as a housing 20 with a closed bottom 21, exposed to seat 13, the periphery of the bottom suitably being designed as a frustrum of a cone , the cone angle of which preferably is smaller than the cone angle of the seat, the cone portion of the seat with the smallest diameter cutting into the middle of the bottom cone in order to obtain a linear sealing, in which way certain substantial tolerances never can detrimentally affect the sealing function and, when the valve initially is used as well as after e.g. a wear during many years, a satisfactory sealing is guaranteed.

From the end of housing 20, which is positioned behind in relation to seat 13, a ring flange 22 projects radially outwards, to which a guide bushing 23 is peripherally connected, which axially projects above the ring flange in both directions, that portion of the guide bushing, which faces the seat, preferably jointly with an inclined alignment surface 24 all around on the outside of housing 20, forming an alignment channel 24' and a holding-on element for regulating spring 14, the opposite end of which being supported by that side of partition wall 12, which is exposed to the outlet, around seat 13, preferably outside a ring bead 25, which projects from the partition wall, as a positioning indication element.

That axial portion of the guide bushing, which is turned away from the seat, functions as an alignment and protection element for thermostat body 17, which jointly with a portion, which fills housing 20 with an approximate fit, is provided with a flange-like collar 26, in connection with which the thermostat body is provided with telescope- or cascade-like elements 27, 28, 29, with decreasing diameter, of which the outermost element, having the smallest diameter, functions as a piston, being designed to adjustably bear on spindle 18.

Said adjustability is obtained by means of a calibration device 30, which from the side of the thermostat body by means of a bolt portion 31, provided with an outer thread, is inserted into a through bore 32, provided with a corresponding inner thread, in spindle 18. That end of bolt portion 31, which is turned away from the thermostat body, is provided with adjustment means 33, e.g. a socket head cap screw hole, which can be reached through the bore in the spindle and through valve handle 19 after a removal of a cover 34, which with a press fit is inserted into a through opening 35 in bottom 36 of the valve handle.

In said opening 35 in the bottom of the valve handle an inner flange 37, made of the bottom of the handle all around, inwardly projects on the side, which is turned towards set-off 16, which inner flange 37 leaves an opening 38, through which spindle 18 is inserted with a slip fit. The end of the spindle adjacent the cover is provided with a lock ring 40, inserted into a groove 39 all around, a sliding plate 41 being provided between lock ring 40 and flange 37. Also on that side of flange 37, which is turned towards the thermostat body, the spindle is surrounded by a sliding plate 42 having an axial collar 43, designed to bear on the spindle on that side, which is turned towards the thermostat body. Collar 43 functions as a positioning and centering element for the one end of a screw-shaped overload spring 44, which concentrically surrounds the spindle and by its opposite end is supported by a corresponding sliding plate 45 having a collar 46, which two elements roughly at the same height as piston 29 surround the spindle and are pressed by spring 44 against a spindle set-off 47 all around via a spacer 48. The compressive force of the overload spring is 1.5-10, preferably 4, times larger than the compressive force of the regulating spring.

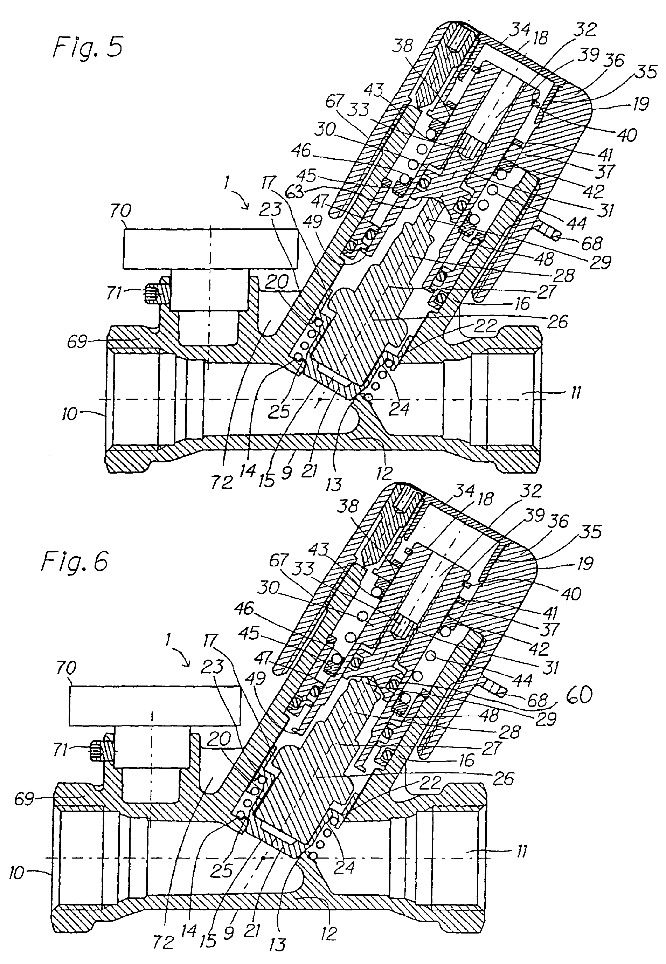

Thus, in connection with said set-off 47 spindle 18 extends with a somewhat increased diameter to its free end, which is turned towards the valve body and provided with a projecting stop flange 49 all around, which is designed to limit the movement of the spindle in a direction away from the valve body by, in such an outer position according to Fig. 5, bearing on a stop element, preferably a first inner flange 50 of an essentially casing-shaped O-ring holder 51, which with a form fit from the outside is inserted into wall 16 having an inner wall set-off 52 as an insertion limitation and a lock ring 53, inserted into the wall opening all around, as a lock element. Adjacent wall set-off 52 holder 51 is provided with an outer groove 54 all around, designed to receive an O-ring 55, whereas between inner flange 50 and a second inner flange 56, at an axial distance in a direction towards the handle, a groove 57 is formed, designed to receive an O-ring 58.

Calibration device 30 has, in connection with bolt portion 31, a saucer-shaped base portion 59, which is guided in an expanded spindle opening 60, which is concentric in relation to bore 32, the base portion being surrounded by a groove 61 all around with an O-ring 62 mounted therein. Free end side 63 of base portion 59 suitably is concave or conically recessed in order to guide piston 29 in an optimal way.

In the bottom of the handle a lock screw 64 with a socket head cap screw hole 65 is axially and excentrically inserted from the outside. The bottom of the lock is on its outer side provided with a temperature scale 66 and possibly additional symbols. The scale suitably has adjustment lines between 35 and 65° C. Handle casing 67 is, by means of an inner thread, screwed onto an outer thread on wall 16 and can be provided with a mounting lug 68 for a marking plate (not shown).

Valve house 9 is, within the areas of inlet 10, provided with a hollow raised portion 69, designed to receive a thermometer 70, which can be fastened by means of a stop screw 71, inserted through the raised portion. The thermometer shows, due to its exposure against the hollow space of the raised portion and the material of the house, the temperature of the medium, which flows through the valve. A wall 72 between raised portion 69 and wall 16 can be used as a visual reference.

The calibration can be carried out by turning handle 19 to its upper/outer end position (Fig. 2). This position can easily be detected, when stop flange 49 of spindle 18 bears on first inner flange 50 and simultaneously inner flange 37 of the handle bottom bears on lock ring 40 via sliding plate 41. This position is also the maximal open position of the valve. Cover 34 with its temperature scale 66 is loosely mounted in opening 35, e.g. the 65° C line being directed towards wall 72. The handle then is turned clockwise, until the valve is positioned at 35°. The cover is removed and calibration device 30 is turned, until a flow of X 1/h is obtained. The 35° - line on the scale is directed towards wall 72 and the cover is completely pressed into opening 35, a snap-in of the cover being obtained due to the design of the cover and said opening, shown in the drawings.

The temperature adjustment can be done by adjusting the valve at e.g. 55° C, after which lock screw 64 is tightened.

The shut-off function/tightness is controlled by turning the handle clockwise to a stop, which it is easy to feel, when handle bottom 36 bears on the free end of wall 16 and simultaneously overload spring 44 via the spindle, the calibration device and thermostat body 17 exerts a shut-off pressure on valve body 15, which always is sufficiently large . By means of a flow meter (not shown), connected to the outlet, it can be shown, that the flow is zero.

The handle of a valve, preadjusted in this manner, can be turned, the distance between the valve body and the seat being changed. This distance will determine, at which temperature the valve is to be opened/shut-off, due to a precise length of the thermostat body for a certain temperature. The linear movement, which a turning of the handle causes, is transferred via the overload spring, which is stiff compared to the regulating spring.

In case the temperature of the water is lower than the value, which is adjusted by means of the scale, the valve body will not tightly bear on the seat but form an opening gap, through which water cannot pass. In case the temperature of the water in branch 7 increases to a higher temperature than the adjusted temperature , the valve body will be completely pressed against the seat, since the expansion of the thermostat body primarily is seized by regulating spring 14, which is weaker than over load spring 44. Thus, a sufficiently large surface pressure will be exerted between the valve body and the seat, which results in, that the flow ceases and the valve is shut off.

If the temperature for any reason continues to increase in the pipe line system, the length of the thermostat body will increase additionally. To absorb this length and stress increase and prevent, that valve parts are subjected to over loads, which can damage and destroy them, the valve is provided with an over load spring 44, which under said operation conditions is compressed by the thermostat body during a certain limited movement of spindle 18.

When a water and sanitation system is to be repaired etc., it ought to be possible to shut off the loop. Thus, the valve according to the present invention is provided with a manual shut-off function. In order to shut off the valve the handle is turned clockwise to said stop position. The overload spring will then be compressed additionally, e.g. with 5 mm. This extra energy buffer is used to compensate for the length reduction of the thermostat body, which is caused by the cooling, when the valve has been shut off at an elevated temperature. The overload spring will in this situation guarantee, that a sufficiently high surface pressure is maintained between the valve body and the seat, the valve remaining tight also after the cooling.

The present invention is not limited to the embodiments described above and shown in the drawings but can be modified and supplemented in an arbitrary manner within the scope of the following claims.

## Claims

1. A thermal control valve (1), which comprises a valve house (9) having an inlet (10) and an outlet (11), which are separated from each other by a partition wall (12), a seat (13) being arranged in the wall, with which seat a valve body (15) cooperates against the force of a regulating spring (14), is guided in a wall (16) and is influenced by a thermostat body (17), which in its turn is influenced by a spindle (18), the axial position of which and consequently also the position of the valve body and the contact force of the valve body against the seat respectively being adjustable by means of a valve handle (19), **characterized in that** the one end of the thermostat body (17) in a way known per se is designed to, as a thermal protection, influence an overload spring (44), which directly or indirectly with its one end is supported by the valve handle (19), with a larger compressive force than said regulating spring (14), **in that** said overload spring is mounted around and with its other end is supported by the spindle (18), **in that** the spindle is mounted in a movable way in relation to the valve handle (19) through the thermostat body (17), and **in that** the overload spring (44) in addition to its function as a thermal protection is designed to compensate for the length reduction of the thermostat body (17), when the temperature is lowered, in order to exert a cooling safety function.

2. A thermal control valve according to claim 1, **characterized in that** the valve body (15) has the shape of a housing (20) with a closed bottom (21), exposed to the seat (13), suitably having the shape of a frustum of a cone, the periphery of the bottom suitably having the shape of a frustum of a cone, the cone angle of which is smaller than the cone angle of the seat, the cone portion of the seat, with the smallest diameter, cutting into the middle of the bottom cone in order to obtain a linear tightening.

3. A thermal control valve according to claim 2, **characterized in that** from that end of said housing (20), which is in a rear position in relation to the seat (13), a ring flange (22) projects outwards in a radial direction, with which a guide bushing (23) is associated in a peripheral position, which projects outwards above the ring flange in an axial direction in both directions, that part of the guide bushing, which is turned towards the seat, preferably jointly with an oblique alignment surface (24) on the outside of the housing (20) all around, forming an alignment channel (24') and a support for the regulating spring (14), the other end of which being supported by that side of the partition wall (12) around the seat (13), which is exposed to the outlet, preferably outside a ring bead (25), which projects from the partition wall, as a position indication element.

4. A thermal control valve according to claim 2 or 3, **characterized in that** that axial part of the guide bushing (23), which is turned away from the seat, is used as an alignment and protective element for the thermostat body (17), which in connection with a part, which fills the housing (20) with a rough fit, is provided with a flange-like collar (26), in connection with which the thermostat body is provided with telescope- or cascade-like elements (27, 28, 29), the diameters of which decrease, the outermost of which having the smallest diameter functioning as a piston for an adjustable contact with the spindle (18), **in that** said adjustability is designed to be obtained by means of a calibration device (30), which from the side of the thermostat, by means of a bolt portion (31), provided with an outer thread, is inserted into a through hole (32), provided with a corresponding inner thread, in the spindle (18), and **in that** that end of the bolt portion (31), which is turned away from the thermostat body, is provided with adjustment means (33), e.g. a socket head cup screw hole, which can be reached through the bore in the spindle and through the handle (19), preferably subsequently to the removal of a cover (34), which with press fit is inserted into a through opening (35) in the bottom (36) of the handle.

5. A thermal control valve according to claim 4, **characterized in that** in said handle bottom opening (35) an inner flange (37), formed by the handle bottom all around, projects inwards on that side, which is turned towards the wall (16), which inner flange (37) leaves an opening (38), through which the spindle (18) is guided with a sliding fit, **in that** the end of the spindle adjacent the cover is provided with a lock ring (40), which is inserted into a groove (39) all around, between which lock ring and the flange (37) a sliding plate (41) is mounted, **in that** also on that side of the flange (37), which is turned towards the thermostat body, the spindle is surrounded by a sliding plate (42) having an axial collar (43), which will come in contact with the spindle on that side, which is turned towards the thermostat body, and **in that** the collar (43) functions as a position indication and centering element for the one end of the overload spring (44), which concentrically surrounds the spindle and is supported , with its other side, by a corresponding sliding plate (45) having a collar (46), which two elements, roughly at the same height as the piston (29), surround the spindle and are pressed by the overload spring (44) against a spindle set-off (47) all around, suitably via a spacer (48).

6. A thermal control valve according to any of claims 1-5, **characterized in that** the compressive force of the overload spring (44) is 1.5-10, preferably 4 times larger than the compressive force of the regulating spring (14).

7. A thermal control valve according to claim 5, **characterized in that** the spindle (18) extends , in connection with said set-off (47) having a somewhat enlarged diameter, up to its free end, which is turned towards the valve body and is provided with a projecting stop flange (49) all around, which is designed to limit the movement of the spindle away from the valve body by, in such an outer position, bearing on a stop element, preferably a first inner flange (50) on a mainly casing-shaped O-ring holder (51), which with shape fit from the outside is inserted into the wall (16) having an inner housing set-off (52) as an alignment limitation and a lock ring (53), inserted into a groove all around in the wall opening, as a locking element, **in that** the holder (51) adjacent the wall set-off (52) preferably is provided with an outer groove (54) all around, designed to receive an O-ring (55), whereas in addition to the inner flange (50) a second inner flange (56) is arranged at an axial distance from it and towards the handle, designed to form a groove (57) to receive an O-ring (58).

8. A thermal control valve according to any of claims 4-7, **characterized in that** the calibration device (30) in connection with the bolt portion (31) is provided with a saucer-like base portion (59), which is guided in an enlarged spindle opening (60), which is concentric in relation to the bore (32), the base portion being surrounded by a groove (61) all around with an O-ring (62) mounted in it, and **in that** the free end side (63) of the base portion (59) suitably is concavely or conically recessed for an optimal alignment of the piston (29).

9. A thermal control valve according to any of claims 4-8, **characterized in that** in the handle bottom (36) from the outside a lock screw (64) with a socket head cap screw hole (65) is axially and eccentrically inserted, **in that** the cover bottom on its outside is provided with a temperature scale (66) and possibly additional symbols, **in that** the scale suitably is provided with adjustment lines for the temperature interval to be adjusted, e.g. between 35 and 65° C, and **in that** the handle casing (67) by means of an inner thread is screwed onto an outer thread on the wall (16) and suitably is provided with a mounting lug (68) for a marking plate.

10. A thermal control valve according to any of claims 1-9, **characterized in that** the valve house (9) within the area of the inlet (10) is provided with a hollow raised portion (69), designed to receive a thermometer (70), which can be fastened by means of a stop screw (71), inserted through said raised portion, which thermometer will, due to its exposure against the cavity of the raised portion and the material of the house, indicate the temperature of the medium, which flows through the valve, and/or **in that** a wall (72) between the raised portion (69) and the wall (16) will be used as a visual position reference.

## Patentansprüche

1. Wärmesteuerungsventil (1), das ein Ventilgehäuse (9) mit einem Einlass (10) und einem Auslass (11) umfasst, die voneinander durch eine Scheidewand (12) getrennt sind, wobei in der Wand eine Aufnahme (13) angebracht ist, mit der ein Ventilkörper (15) gegen die Kraft einer Einstellfeder (14) zusammenwirkt, der in einer Wand (16) geführt und durch einen Thermostatkörper (17) beeinflusst wird, der seinerseits durch eine Spindel (18) beeinflusst wird, dessen axiale Position und folglich auch die Position des Ventilkörpers und die Kontaktkraft des Ventilkörpers gegen die Aufnahme jeweils mittels eines Ventilgriffs (19) verstellbar ist, **gekennzeichnet dadurch, dass** ein Ende des Thermostatkörpers (17) auf an sich bekannte Art als Wärmeschutz eine Überlastfeder (44) beeinflussen soll, die direkt oder indirekt mit einem Ende vom Ventilgriff (19) abgestützt wird, mit einer größeren Druckkraft als die Einstellfeder (14), **dadurch**, dass die Überlastfeder um die Spindel (18) herum montiert und mit ihrem anderen Ende von ihr abgestützt wird, **dadurch**, dass die Spindel beweglich in bezug auf den Ventilgriff (19) durch den Thermostatkörper (17) montiert wird, sowie **dadurch**, dass die Überlastfeder (44) zusätzlich zu ihrer Funktion als Wärmeschutz die Längenreduzierung des Thermostatkörpers (17) ausgleichen soll, wenn die Temperatur abgesenkt wird, zur Kühlungssicherheit.

2. Wärmesteuerungsventil nach Anspruch 1, **gekennzeichnet dadurch, dass** der Ventilkörper (15) die Form eines Gehäuses (20) mit einem geschlossenen Boden (21) hat, zu der Aufnahme (13) hin gewandt, zweckmäßigerweise in Form eines Kegelstumpfs, wobei die Peripherie des Bodens zweckmäßigerweise die Form eines Kegelstumpfs hat, dessen Konuswinkel kleiner ist als der Konuswinkel der Aufnahme, und wobei der Konusteil der Aufnahme, mit dem kleinsten Durchmesser, in die Mitte des Bodenkonus schneidet, um eine lineare Festspannung zu erhalten.

3. Wärmesteuerungsventil nach Anspruch 2, **gekennzeichnet dadurch, dass** von dem Ende von besagtem Gehäuse (20), das in einer rückwärtigen Position in Bezug auf die Aufnahme (13) ist, ein Ringflansch (22) in einer radialen Richtung nach außen ragt, mit dem eine Führungsbuchse (23) in Randposition verbunden ist, die oberhalb des Ringflanschs in einer axialen Richtung in beiden Richtungen nach außen ragt, dass ein Teil der Führungsbuchse, die der Aufnahme zugewandt ist, vorzugsweise gemeinsam mit einer an der Außenseite des Gehäuses (20) umlaufenden schrägen Ausrichtungsoberfläche (24), einen Ausrichtungskanal (24') bildet und eine Stütze für die Einstellfeder (14), deren anderes Ende durch die Seite der Scheidewand (12) um die Aufnahme (13) herum gestützt wird, die dem Auslass zugewandt ist, vorzugsweise außerhalb einer Ringverstärkungsrippe (25), die von der Scheidewand vorsteht, als Positionsangabeelement.

4. Wärmesteuerungsventil nach Anspruch 2 oder 3, **gekennzeichnet dadurch, dass** derjenige axiale Teil der Führungsbuchse (23), der von der Aufnahme abgewandt ist, als Ausrichtungs- und Schutzelement für den Thermostatkörper (17) dient, der in Verbindung mit einem Teil, das im Gehäuse (20) mit grobem Sitz sitzt, mit einem flanschähnlichen Kragen (26) ausgestattet ist, in Verbindung mit dem der Thermostatkörper mit teleskop- oder kaskadenähnlichen Elementen ausgestattet ist (27, 28, 29), deren Durchmesser abnehmen und deren äußerstes mit dem kleinsten Durchmesser als Kolben für einen verstellbaren Kontakt mit der Spindel (18) fungiert, **dadurch** dass besagte Regulierbarkeit mittels einer Kalibriervorrichtung (30) erhalten wird, die von der Seite des Thermostats, mittels eines Bolzenteils (31), mit einem Außengewinde, in ein Durchgangsloch (32) eingefügt wird, mit einem entsprechenden Innengewinde, in der Spindel (18), und **dadurch** dass dasjenige Ende des Bolzenteils (31), das von dem Thermostatkörper abgewandt ist, mit Einstellungsmitteln (33) ausgestattet ist, z.B. einer Bohrung für Innensechskantschraube mit Kopf, die durch die Bohrung in der Spindel erreicht werden kann und durch den Griff (19), vorzugsweise nach Entfernung einer Abdeckung (34), die mit Presspassung in eine Durchgangsöffnung (35) am Boden (36) des Griffes eingeführt ist.

5. Wärmesteuerungsventil nach Anspruch 4, **gekennzeichnet dadurch, dass** in besagter Griffbodenöffnung (35) ein innerer Flansch (37), umlaufend durch den Griffboden gebildet, an derjenigen Seite nach innen ragt, die zu der Wand (16) hinzeigt, wobei der innere Flansch (37) eine Öffnung freilässt (38), durch die die Spindel (18) mit einem Gleitsitz geführt wird, **dadurch**, dass das Ende der Spindel nahe der Abdeckung mit einem Seegerring (40) ausgestattet ist, der in eine umlaufende Nut (39) eingefügt ist, wobei zwischen Seegerring und Flansch (37) eine Gleitplatte (41) montiert ist, **dadurch**, dass auch auf der Seite des Flanschs (37), die zu dem Thermostatkörper hinzeigt, die Spindel von einer Gleitplatte (42) mit einem axialen Kragen (43) umschlossen ist, die in Kontakt mit der Spindel an derjenigen Seite kommt, die zu dem Thermostatkörper hinzeigt, sowie **dadurch**, dass der Kragen (43) als Positionsangabe- und Zentrierungselement für dasjeniges Ende der Überlastfeder (44) fungiert, das konzentrisch die Spindel umgibt und, mit seiner anderen Seite, von einer entsprechenden Gleitplatte (45) mit einem Kragen (46) abgestützt wird, wobei die beiden Elemente, ungefähr auf derselben Höhe wie der Kolben (29), die Spindel umgeben und von der Überlastfeder (44) gegen einen umlaufenden Spindelrücksprung (47) gedrückt werden, zweckmäßigerweise mittels eines Distanzstücks (48).

6. Wärmesteuerungsventil nach einem beliebigen der Ansprüche 1-5, **gekennzeichnet dadurch, dass** die Druckkraft der Überlastfeder (44) 1,5-10 mal, vorzugsweise 4mal breiter als die Druckkraft der Einstellfeder (14) ist.

7. Wärmesteuerungsventil nach Anspruch 5, **gekennzeichnet dadurch, dass** die Spindel (18) sich, in Verbindung mit besagtem Rücksprung (47) mit einem etwas vergrößerten Durchmesser, bis zu dem freien Ende erstreckt, das zu dem Ventilkörper weist und mit einem vorragenden umlaufenden Halteflansch (49) ausgestattet ist, der die Bewegung der Spindel weg von dem Ventilkörper begrenzen soll durch, in einer solchen Außenposition, das Aufliegen auf einem Stopper, vorzugsweise einem ersten inneren Flansch (50) auf einem vorwiegend gehäuseförmigen Dichtungsringhalter (51), der mit Formsitz von außen in die Wand (16) mit einem inneren Gehäuserücksprung (52) als Ausrichtungsbegrenzung und einem Seegerring (53) in eine umlaufende Nut in der Wandöffnung eingefügt ist, als Verschlusselement, **dadurch**, dass der Halter (51) nahe dem Wandrücksprung (52) vorzugsweise mit einer umlaufenden Außennut (54) ausgestattet ist, die einen Dichtungsring (55) aufnimmt, während zusätzlich zu dem inneren Flansch (50) ein zweiter innerer Flansch (56) in axialem Abstand davon angebracht und auf den Griff zu, um eine Nut (57) zu bilden, um einen Dichtungsring (58) aufzunehmen.

8. Wärmesteuerungsventil nach einem beliebigen der Ansprüche 4-7, **gekennzeichnet dadurch, dass** die Kalibriervorrichtung (30) in Verbindung mit dem Bolzenteil (31) mit einem untertassenähnlichen Bodenteil (59) ausgestattet ist, das in einer vergrößerten Spindelöffnung (60) geführt wird, die konzentrisch in Bezug auf die Bohrung (32) ist, wobei das Bodenteil durch eine umlaufende Nut (61) mit einem darin montierten Dichtungsring (62) umschlossen ist, sowie **dadurch**, dass die Seite des freien Endes (63) des Bodenteils (59) hohl oder zweckmäßigerweise konisch ausgespart ist, für eine optimale Ausrichtung des Kolbens (29).

9. Wärmesteuerungsventil nach einem beliebigen der Ansprüche 4-8, **gekennzeichnet dadurch, dass** in dem Griffboden (36) von außen eine Verschlussschraube (64) mit einer Bohrung für Innensechskantschraube mit Kopf (65) axial und exzentrisch eingefügt ist, **dadurch** dass der Deckboden außen mit einer Temperaturskala (66) ausgestattet ist und möglicherweise zusätzlichen Symbolen, **dadurch**, dass die Skala zweckmäßigerweise mit Einstellungslinien für das einzustellende Temperaturintervall ausgestattet ist, z.B. zwischen 35 und 65° C, sowie **dadurch**, dass das Griffgehäuse (67) mittels eines Innengewindes auf ein Außengewinde an der Wand (16) geschraubt wird und zweckmäßigerweise mit einem Montageansatz (68) für eine Markierungsplatte ausgestattet ist.

10. Wärmesteuerungsventil nach einem beliebigen der Ansprüche 1-9, **gekennzeichnet dadurch, dass** das Ventilgehäuse (9) innerhalb des Bereichs des Einlasses (10) mit einem hohlen angehobenen Teilstück (69) ausgestattet ist, um ein Thermometer (70) aufzunehmen, das mittels einer Halteschraube (71) befestigt werden kann, durch besagtes angehobenes Teilstück eingefügt, wobei das Thermometer aufgrund seiner Aussetzung gegen den Hohlraum des angehobenen Teilstücks und das Material des Gehäuses, die Temperatur des Mittels angibt, das durch das Ventil fließt, und/oder **dadurch**, dass eine Wand (72) zwischen dem angehobenen Teilstück (69) und der Wand (16) als visueller Positionsbezug verwendet wird.

## Revendications

1. Vanne thermostatique (1), comprenant une chambre de robinets (9) ayant une entrée (10) et une sortie (11), qui sont séparées l'une de l'autre par une paroi de séparation (12), un logement (13) étant disposé dans la paroi, avec lequel un corps de vanne (15) coopère contre la force d'un ressort de régulation (14), est guidé dans une paroi (16) et est influencé par un corps de thermostat (17), qui à son tour est influencé par une tige (18), dont la position axiale et par conséquent également la position du corps de vanne et la force de contact du corps de vanne contre le logement étant respectivement réglables au moyen d'une poignée de vanne (19), **caractérisée en ce que** la première extrémité du corps de thermostat (17) d'une façon connue en soi est conçue pour influencer un ressort de surcharge (44) en qualité de protection thermique, qui directement ou indirectement avec l'une de ses extrémités est supporté par la poignée de vanne (19), avec une force de compression plus large que ledit ressort de régulation (14), **en ce que** ledit ressort de surcharge est monté autour de la tige (18) et avec son autre extrémité est supporté par cette tige (18), **en ce que** la tige est montée de façon mobile par rapport à la poignée de vanne (19) à travers le corps de thermostat (17), et **en ce que** le ressort de surcharge (44) en plus de sa fonction de protection thermique est conçu pour compenser la réduction de longueur du corps de thermostat (17), quand la température est abaissée, afin d'exercer une fonction de sécurité en cours de refroidissement.

2. Vanne thermostatique selon la revendication 1, **caractérisée en ce que** le corps de vanne (15) a la forme d'un logement (20) avec un fond fermé (21), exposé au logement (13), ayant de façon appropriée la forme d'un tronc d'un cône, la périphérie du fond ayant de façon appropriée la forme d'un tronc de cône dont l'angle de cône est plus petit que l'angle de cône du logement, la partie de cône du logement avec le diamètre le plus petit coupant dans le milieu du cône de fond afin d'obtenir un serrage linéaire.

3. Vanne thermostatique selon la revendication 2, **caractérisée en ce que** depuis cette extrémité dudit logement (20), qui est dans une position postérieure par rapport au logement (13), une bride annulaire (22) dépasse vers l'extérieur dans une direction radiale, à laquelle un raccord de guide (23) est associé dans une position périphérique, qui dépasse vers l'extérieur au-dessus de la bride annulaire dans une direction axiale dans les deux directions, la partie du raccord de guide qui est orientée vers le logement, de préférence conjointement à une surface d'alignement oblique (24) à l'extérieur du logement (20) tout autour, formant un canal d'alignement (24') et un support pour le ressort de régulation (14), dont l'autre extrémité est supporté par ce côté de la paroi de séparation (12) autour du logement (13) qui est exposé à la sortie, de préférence à l'extérieur d'un bourrelet annulaire (25) qui dépasse de la paroi de séparation comme élément d'indication de position.

4. Une vanne thermostatique selon la revendication 2 ou 3, **caractérisée en ce que** la partie axiale du raccord de guide (23) qui est détournée du logement est utilisée comme élément de protection et d'alignement pour le corps de thermostat (17), qui, en connexion avec une partie qui remplit le logement (20) avec ajustement à l'état brut, est pourvu d'un collier similaire à une bride (26), en connexion avec lequel le corps de thermostat est pourvu d'éléments à télescope ou à cascade (27, 28, 29), dont les diamètres diminuent, le plus éloigné ayant le diamètre le plus petit fonctionnant comme piston pour un contact réglable avec la tige (18), **en ce que** ladite ajustabilité est conçue pour être obtenue au moyen d'un dispositif de calibrage (30), qui du côté du thermostat, au moyen d'une partie de boulon (31), pourvu d'un filetage extérieur, est inséré dans un trou de passage (32), pourvu d'un filetage intérieur correspondant, dans la tige (18), et **en ce que** l'extrémité de la partie de boulon (31), détournée du corps de thermostat, est pourvue des moyens de réglage (33), par exemple une forure pour une vis à tête cylindrique creuse, qui peut être atteinte à travers la forure dans la tige et à travers la poignée (19), de préférence après l'enlèvement d'une couverture (34), qui est insérée avec ajustement à pression dans une ouverture de passage (35) dans le fond (36) de la poignée.

5. Vanne thermostatique selon la revendication 4, **caractérisée en ce que** dans ladite ouverture de fond de poignée (35), une bride intérieure (37), formée par le fond de poignée tout autour, dépasse vers l'intérieur du côté orienté vers la paroi (16), laquelle bride intérieure (37) laisse une ouverture (38), à travers laquelle la tige (18) est guidée avec un ajustement coulissant, **en ce que** l'extrémité de la tige proche de la couverture est pourvue d'un anneau de serrage (40), qui est inséré dans une rainure (39) tout autour, entre lequel anneau de serrage et la bride (37) une plaque coulissante (41) est montée, **en ce que** également de ce côté de la bride (37), qui est orienté vers le corps de thermostat, la tige est entourée d'une plaque coulissante (42) ayant un collier axial (43), qui entrera en contact avec la tige du côté orienté vers le corps de thermostat, et **en ce que** le collier (43) fonctionne comme indication de position et élément de centrage pour la première extrémité du ressort de surcharge (44), qui entoure concentriquement la tige et est supporté, avec son autre côté, par une plaque coulissante correspondante (45) ayant un collier (46), lesquels deux éléments, à peu près à la même hauteur que le piston (29), entourent la tige et sont pressés par le ressort de surcharge (44) contre une saillie de tige (47) tout autour, de façon appropriée par un élément d'espacement (48).

6. Vanne thermostatique selon l'une quelconque des revendications 1-5, **caractérisée en ce que** la force de compression du ressort de surcharge (44) est 1.5-10, de préférence 4 fois plus grande que la force de compression du ressort de régulation (14).

7. Vanne thermostatique selon la revendication 5, **caractérisée en ce que** la tige (18) s'étend, en connexion avec ladite saillie (47) ayant un diamètre quelque peu agrandi, jusqu'à son extrémité libre, qui est orientée vers le corps de vanne et est pourvue d'une bride d'arrêt qui dépasse (49) tout autour, qui est conçue pour limiter l'éloignement de la tige du corps de vanne, dans une telle position extérieure, en reposant sur un élément d'arrêt, de préférence une première bride intérieure (50) sur un support de logement principalement de forme annulaire (51), qui avec ajustement de forme est inséré de l'extérieur dans la paroi (16) ayant une saillie de logement interne (52) comme limitation d'alignement et un anneau de serrage (53), inséré dans une rainure tout autour dans l'ouverture de paroi, comme élément de blocage, **en ce que** le support (51) proche de la saillie de paroi (52) de préférence est pourvu d'une rainure extérieure (54) tout autour, conçue pour recevoir une garniture annulaire (55), tandis qu'en plus de la bride intérieure (50), une deuxième bride intérieure (56) est disposée à une distance axiale de ce dernier et vers la poignée, conçue pour former une rainure (57) pour recevoir une garniture annulaire (58).

8. Vanne thermostatique selon l'une quelconque des revendications 4-7, **caractérisée en ce que** le dispositif de calibrage (30) en connexion avec la partie de boulon (31) est pourvu d'une partie de base similaire à une soucoupe (59) qui est guidée dans une ouverture de tige agrandie (60) concentrique par rapport au trou de passage (32), la partie de base étant entourée par une rainure (61) tout autour avec une garniture annulaire (62) montée dedans, et **en ce que** le côté d'extrémité libre (63) de la partie de base (59) a de façon appropriée un enfoncement concave ou conique pour un alignement optimal du piston (29).

9. Vanne thermostatique selon l'une quelconque des revendications 4-8, **caractérisée en ce que** dans le fond de poignée (36) une vis de serrage (64) est axialement et de manière excentrique insérée de l'extérieur avec une forure pour une vis à tête cylindrique creuse (65), **en ce que** le fond de couverture sur sa partie externe est pourvu d'une graduation de température (66) et si possible de symboles supplémentaires, **en ce que** la graduation est pourvue de façon appropriée de lignes de réglage pour ajuster l'intervalle de température, par exemple entre 35 et 65° C, et **en ce que** le logement de poignée (67) au moyen d'un filetage intérieur est vissé sur un filetage extérieur sur la paroi (16) et est pourvu de façon appropriée d'une patte de fixation (68) pour une plaque de marquage.

10. Vanne thermostatique selon l'une quelconque des revendications 1-9, **caractérisée en ce que** la chambre de robinets (9) dans la zone de l'entrée (10) est pourvue d'une partie soulevée creuse (69), conçue pour recevoir un thermomètre (70) qui peut être fixé au moyen d'une vis d'arrêt (71) insérée à travers ladite partie soulevée, lequel thermomètre, du fait de son exposition contre la cavité de la partie soulevée et le matériau de la chambre, indiquera la température du moyen qui coule à travers la vanne, et/ou **en ce qu'**une paroi (72) entre la partie soulevée (69) et la paroi (16) sera utilisée comme référence de position visuelle.
